Europäisches Patentamt

European Patent Office

Office européen des brevets

(11) Publication number: **0 430 069 A1**

# EUROPEAN PATENT APPLICATION

(21) Application number: 90122306.5

(22) Date of filing: 22.11.90

(51) Int. Cl.⁵: **F16C 11/10**

(30) Priority: 24.11.89 IT 2214789 U

(43) Date of publication of application:
05.06.91 Bulletin 91/23

(84) Designated Contracting States:
DE ES FR GB Bulletin 00/4

(71) Applicant: Roncato, Mario
Via Eschilo, 6
I-20145 Milano(IT)

(72) Inventor: Roncato, Mario
Via Eschilo, 6
I-20145 Milano(IT)

(74) Representative: Modiano, Guido et al
MODIANO, JOSIF, PISANTY & STAUB
Modiano & Associati Via Meravigli, 16
I-20123 Milano(IT)

(54) **Angularly orientatable joint.**

(57) The joint has a flat rotation ring element (1) with a curved surface rotatably connected in a fork-like sleeve (7). Spring loaded tooth and notch engagement means (5,10-12) are provided between the sleeve (7) and the curved surface of the flat rotation ring element (1).

Fig. 4

## ANGULARLY ORIENTATABLE JOINT

The present invention relates to an angularly orientatable joint or articulation with snap-stops according to variable angles within an arc of up to 180°, which is particularly suitable for the angularly orientatable connection of elements of various types, such as handles of brooms, brushes, household appliances and the like with respect to the cleaning implement, orientatable supports for supporting various objects such as flower pots, brackets, lighting devices and miscellaneous items, as well as for the orientatable connection, with automatic stops in various angular positions, of any element or device with respect to another element.

Various types of articulations made of metal, plastics or wood for the orientatable mutual connection of various bodies or elements according to preset angles are already known and in widespread use.

Besides well-known spherical articulation devices, which in practice allow orientations of one body with respect to the other in all directions but according to narrow angles, joints with a central pivot are in fact currently used: said devices are generally constituted by a flattened element provided with a central hole, which is mounted so as to be rigidly associated with one of the elements to be connected and with which a fork which can rotate about a transverse pivot which passes through said central hole is associated. These joints, when used to allow the orientation of one element with respect to the other and stopping in the position thus reached, always require additional locking elements which in some cases are complicated, bulky and often aesthetically unpleasant.

In the field of room cleaning devices, and in particular in the field of floor polishers, window-cleaners and the like, the handle is in fact mounted so as to be orientatable on the cleaning implement, but a pedal-operated or manually-operated locking device is required in order to release it and lock it according to the required orientations.

Furthermore, in the field of manual implements for house-cleaning, such as for example brooms, brushes, window-wipers and the like, the use of orientatable handles with an external locking device would make the implement more bulky and would, in some cases, make it have a not always acceptable overall cost.

The aim of the present invention is therefore to provide a joint or articulation with built-in angularly equidistant stops which can allow variable angles up to 180° and is therefore suitable for being easily used to make the handles of brooms, brushes, household appliances and the like orientatable without entailing increases in bulk for said implements or unpleasant aesthetic effects.

Another object of the present invention is to provide an articulation with built-in stops which is conceived so as to be highly reliable, quiet during orientation operations and can be manufactured using plastics, wood, metal or another suitable material.

Not least object is to provide a joint of the above specified type which is structured so as to have a very low cost, require no maintenance and most of all such that it can be actuated very easily and without excessive efforts.

This aim, these objects and others which will become apparent from the following description are achieved by a joint for the orientatable connection of two elements or tools, which is constituted, according to the present invention, by a plate-like element, substantially a flat ring, which is rigidly anchorable, with one end, to one of the elements to be connected, the opposite end being curved substantially like an arc of a circle and being peripherally provided with equidistant notches, the axis of said notches being directed toward the center of said arc of a circle, at which a through hole is provided, said ring with peripheral notches being insertable in the end of a sleeve which is at least partially fork-shaped and is rotatable about a transverse pivot which is inserted in said hole of said ring, a pawl being freely guided inside said sleeve, said pawl having a tooth which protrudes diametrically from its end, so as to remain engaged alternately with each of said notches, said pawl being mounted opposite to a pre-loaded spring so as tc allow the stable engagement of said tooth in each of said notches and so as to also allow, by means of the angular movement of said sleeve with respect to said ring, the exit of said tooth from said notch and its automatic snap-lock entry in an adjacent notch.

More particularly, said notches have a substantially triangular shape with rounded corners to facilitate the exit of said tooth and the entry thereof into the subsequent notches.

Still according to the invention, the end of either a handle, for brooms, window-cleaners and the like, or a supporting element, to be fixed to walls or to other elements which are movable with respect to the other element rigidly associated with said ring, is furthermore associable with said sleeve by screwing, snap-together locking or the like.

Further characteristics and advantages of the present invention will become apparent from the following detailed description of some embodiments thereof, given with reference to the accompanying drawings, which are provided only by way of non-limitative example and wherein:

figures 1 and 1a are two views, mutually offset by 90°, of a ring articulation of a joint according to the invention which is rigidly associable with an element, for example a broom or a brush or the like;

figures 2 and 2a are respectively a front elevation view and a longitudinal sectional side elevation view of a fork-shaped sleeve in which the ring articulation of figures 1 and 1a is insertable in snap-lock fashion;

figure 3 is a perspective view of a pawl with an end tooth which can be inserted in the sleeve as shown in figures 2-2a; and

figures 4 and 5 are respectively a partially sectional side elevation view and a side elevation view of two examples of practical use of the joint illustrated in the preceding figures.

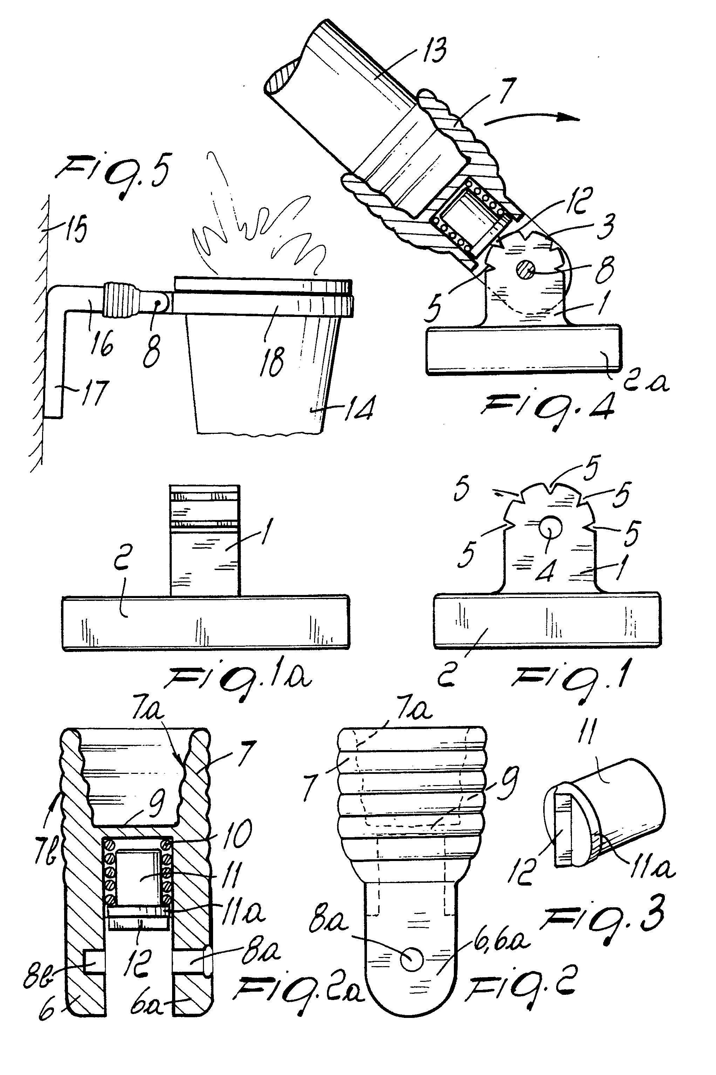

With particular reference to figures 1 to 3, the joint according to the invention is constituted by a flat element 1 which constitutes a rotation ring and has one end rigidly or removably connectable to a body or tool 2 to be connected in an orientatable manner to another element. Said body or tool 2 can be constituted by a broom, a brush, a window-wiper, a supporting wall or any other element for which variations in inclination thereof with respect to another body or tool, either fixed or orientatable, such as an operating handle, a bracket or the like, are desired.

The free end 3 of the ring 1 is substantially curved like a half-circle, and has a through hole 4 at the center of the arc thereof and a plurality of mutually equidistant triangular notches 5 arranged peripherally along the entire half-circle. The median axes, substantially the heights of the triangles which constitute said notches, are directed toward the center of the hole 4 so as to assume a radial arrangement which allows the entry and exit of a tooth from the individual notches, as described in greater detail hereinafter.

The flat ring 1 is insertable in a fork with two arms 6-6a (figures 2 and 2a) which is defined at one end of a tubular body or sleeve 7 and is rotatably anchorable to said fork by means, for example, of a transverse pivot 8 which is inserted in a hole 8a defined for example in the arm 6a and which, after passing through the hole 4 of the ring 1, is screwed in the dead hole 8b defined in the other arm.

The curved surface 3 of the ring 1 therefore allows the sleeve 7 to oscillate about the pivot 8 through an arc of 180°.

The sleeve 7 is furthermore internally provided with a dividing wall 9 which constitutes a resting plane for a cylindrical spring 10 inside which a pawl 11 is axially freely inserted; said pawl 11 has, at its free end, an annular flange 11a outside which there is a triangular tooth 12 which extends along a diameter of said flange. Said pawl 11 can be axially provided with a quadrangular hole for guiding and retention (against its possible rotation) along a quadrangular pin which protrudes from said dividing wall and is telescopically inserted in said axial hole of the pawl.

Therefore, when the fork is pivoted on the ring 1, the pawl, pushed by the appropriately pre-loaded spring, remains engaged with a notch 4, locking the sleeve 7 with respect to the element 2 in a corresponding angular position.

By then acting on the sleeve and simultaneously keeping the element 2 secured with one's hands or feet, the tooth 12 is forced to partially compress the spring to create the room sufficient for exiting of the tooth 12 from the notch 5; after exiting, the tooth 12 rests on the curved portion 3 of the ring, so that by moving the sleeve 7 further the tooth 12 moves at a subsequent notch; when the tooth reaches the notch, the spring reacts against the flange 11a provided in the pawl, moving the tooth 12 axially into the notch; the entry of the tooth 12 therefore occurs automatically and the sleeve thus reaches another stable angular position.

An element, such as for example a handle, a bracket or a support which can be fixed to a wall or also any other element or tool for which an angular movement with respect to the element 2 anchored to the ring 1 is required, is furthermore associable with the sleeve 7 (figures 2-2a) by screwing onto the internal threaded surface 7a or on the external surface 7b.

Thus, for example, as shown by figure 4, the articulation according to the invention can be used to make a handle 13 of a brush or broom 2a mutually angularly orientatable; in this case, in order to achieve the angular movement of the handle it is sufficient to secure the brush and then act on the handle, locking it at the required inclination.

In figure 5, the articulation with automatic snap-stops can instead be used to support a pot 14 hung on a wall 15 which would not allow to keep the axis of the pot perpendicular to the floor if it were not perfectly vertical. In this case, a fork-like sleeve 16 (with spring and pawl) is associated with the toothed ring 1, and is extended by an L-shaped element 17 which can be anchored to the wall 15; the ring 1 instead supports a hoop-like body or the like 18 for supporting the pot.

From what has been described above, it is evident that the articulation with automatic snap stops can be used in many fields of application, such as for example in the field of electric household appliances, toys, technical school implements, lighting devices and others.

Finally, it is obvious that the invention as described above is susceptible to modifications in the materials, in the dimensions of the various components and in the colors without abandoning the scope of the protection of said invention.

Where technical features mentioned in any claim are followed by reference signs, those reference signs have been included for the sole purpose of increasing the intelligibility of the claims and accordingly, such reference signs do not have any limiting affect on the scope of each element identified by way of example by such reference signs.

**Claims**

1. Joint with automatic stops, particularly suitable for connecting in an angularly orientatable manner two elements or tools according to wide angles, characterized in that it comprises a plate-like element (1), substantially a flat ring, which is rigidly anchorable, with one end, to one of the elements (2) to be connected, the opposite end being curved substantially like an arc of a circle and being peripherally provided with equidistant notches (5), the axis of said notches (5) being directed toward the center of said arc of a circle, at which a through hole (4) is provided, said ring (1) with peripheral notches (5) being insertable in the end of a sleeve (7) which is at least partially fork-shaped and is rotatable about a transverse pivot (8) which is inserted in said hole (4) of said ring (1), a pawl (11) being freely guided inside said sleeve (7), said pawl (11) having a tooth (12) which protrudes diametrically from its end, so as to remain engaged alternately with each of said notches (5), said pawl (11) being mounted opposite to a pre-loaded spring (10) so as to allow the stable engagement of said tooth (12) in each of said notches (5) and so as to also allow, by means of the angular movement of said sleeve (7) with respect to said ring (1), the exit of said tooth (12) from said notch (5) and its automatic snap-lock entry in an adjacent notch (5).

2. Joint according to claim 1, characterized in that said notches (5) have a substantially triangular shape and have rounded corners to facilitate the exit and entry of the tooth (12) of said pawl (11), in succession, within the individual notches (5).

3. Joint according to claims 1 and 2, characterized in that said sleeve (7) has, at the end opposite to the fork-shaped one, a threaded portion (7a,7b) both on the inside and on the outside of said sleeve (7) which is suitable for receiving, by screwing, an actuation handle (13), a shaped support, a bracket (17) or the like.

4. Joint according to the preceding claims, characterized in that said pre-loaded spring (10) is interposed between a dividing wall (9) defined in said sleeve (7) and an end flange (11a) of said pawl (11), the tooth (12) of said pawl (11) also having a triangular shape and extending diametrically with respect to said flange (11a).

5. Joint for mutually connecting, in an angularly orientatable manner, two tool elements, characterized in that it comprises a flat rotation ring element (1) defining a curved surface and a fork-like sleeve means (7) defining a forked recess in which said ring element (1) is rotatably connected, spring loaded tooth and notch engagement means (5,10-12) being provided between the curved surface of said ring element (1) and the recess of said sleeve (7).

Fig.5

Fig.4

Fig.1a

Fig.1

Fig.3

Fig.2a

Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-E- 24 465 (CHALIER) * Page 1; figures * | 1,5 | F 16 C 11/10 |
| A | | 2,4 | |
| Y | DE-C- 440 468 (HALDER) * Page 1, lines 25-30; figures * | 1,5 | |
| A | | 2,4 | |
| Y | US-A-1 758 309 (BLOCK) * Page 2, lines 47-63; figures 10-12 * | 1,5 | |
| A | | 2,4 | |
| A | FR-A-1 279 366 (GIMBERT) * Page 2, left-hand column, line 57 - right-hand column, line 25; figure 4 * | 1,5 | |
| A | US-A-1 587 724 (HARLEY) * Page 1, lines 58-66; figures 1,2 * | 2 | |
| A | FR-A-2 064 782 (MASSON) * Page 1, line 36 - page 2, line 3; figure 2 * | 1 | TECHNICAL FIELDS SEARCHED (Int. Cl.5) |
| A | US-A-4 363 561 (HSIEH) | | F 16 C<br>F 16 D<br>B 60 N<br>E 06 C<br>B 25 B<br>A 47 C<br>E 05 D<br>F 21 V |

The present search report has been drawn up for all claims

| Place of search | Date of completion of the search | Examiner |
|---|---|---|
| THE HAGUE | 18-02-1991 | GUTHMULLER J.A.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)